# EUROPÄISCHE PATENTSCHRIFT

(11) **EP 0 592 443 B1**
(45) Veröffentlichungstag und Bekanntmachung des Hinweises auf die Patenterteilung: **05.02.1997**
(21) Anmeldenummer: 91920673.0
(22) Anmeldetag: 28.11.1991
(51) Int. Cl.: B01D 3/10, B01L 7/00, H05B 6/80

(54) **VORRICHTUNG ZUM DESTILLIEREN VON FLÜSSIGKEITEN IM VAKUUM**
APPARATUS FOR THE VACUUM DISTILLATION OF LIQUIDS
DISPOSITIF DE DISTILLATION DE LIQUIDES SOUS VIDE

(30) Priorität: 30.11.1990 DE 4038273
(43) Veröffentlichungstag der Anmeldung: 20.04.1994
(73) Patentinhaber: MLS GMBH, D-88299 Leutkirch (DE)
(72) Erfinder: HEIERLI, Jacob, CH-9035 Grub (CH)
(74) Vertreter: Schmidt-Evers, Jürgen, Dipl.-Ing.
(86) Internationale Anmeldenummer: EP9102255
(87) Internationale Veröffentlichungsnummer: WO9209351

(56) Entgegenhaltungen:
- EP-A- 0 356 638
- DE-A- 3 015 300
- FR-A- 1 204 128
- GB-A- 2 054 330
- US-A- 4 303 819
- US-A- 4 313 786
- US-A- 4 940 865

## Beschreibung

Die Erfindung betrifft eine Vorrichtung nach dem Oberbegriff des Anspruchs 1.

Aus der Praxis ist eine Vorrichtung bekannt, die gemeinhin als Rotationsverdampfer bezeichnet wird und zum Einsatz in Laboratorien vorgesehen ist. Ein Aufnahmebehälter dieses Rotationsverdampfers ist als Destillierkolben aus Glas ausgebildet, der während der Destillation mittels eines Motors um seine Achse gedreht wird und über einen sog. Destlllationsaufsatz mit einem Kühler, z.B. einem Produktkühler, wie etwa dem Liebig-Kühler, verbunden ist. Der sog. Destillationsvorstoß stellt die Verbindung zwischen dem Kühler und dem Auffangbehälter, der sog. Vorlage, her. Eine Vakuumquelle, beispielsweise eine Wasserstrahlpumpe, ist an den Kühler, im unteren Bereich desselben, angeschlossen. Als Heizanordnung wird ein sog. Heizbad verwendet, vorzugsweise mit einem flüssigen Wärmeübertragungsmedium, das mittels Tauchsieder, Gasbrenner oder elektrischer Kochplatte erwärmt wird.

Das Einrichten des Rotationsverdampfers, d.h. das Befüllen des Destillierkolbens mit der zu destillierenden Flüssigkeit und das Verbinden desselben mit dem Destillationsaufsatz ist zeitaufwendig und unhandlich, wobei insbesondere auf die Genauigkeit der Verbindungsteile, d.h. der Glasschliffe, und sorgfältiges Einschmieren derselben mit Vakuumfett zu achten ist. Die Destillierkolben gehen, da sie aus Glas bestehen, während der Destillation häufiger zu Bruch, so daß der Destillationsvorgang wiederholt werden muß. Die vergleichsweise hohe Trägheit der verschiedenen, im Heizbad verwendeten flüssigen Wärmeübertragungsmittel erlaubt einerseits eine entsprechend genaue Temperatureinstellung, erfordert andererseits jedoch einen relativ hohen Zeitaufwand für die Einstellung auf unterschiedliche Temperaturen. Der Rotationsverdampfer ist weiterhin nicht zur Durchführung von kontinuierlichen Destillationsvorgängen geeignet.

In der EP-A-0 356 638 ist eine Vorrichtung zum Destillieren von Flüssigkeiten im Vakuum in Form einer Lösungsmittel-Aufbereitungsanlage für fett-, farb- oder harzverschmutzte Waschlösungen beschrieben. Bei dieser bekannten Vorrichtung ist die Aufnahmekammer durch einen seitlichen mit Scharnieren schwenkbar gelagerten Deckel wahlweise zu öffnen bzw. zu schließen. In der Aufnahmekammer steht der Aufnahmebehälter auf einem Träger. Die zu behandelnde Flüssigkeit wird dem Aufnahmebehälter mittels einer Pumpe zugeführt, die sich von einem die verschmutzte Waschlösung enthaltenden Faß in die Aufnahmekammer erstreckt und oberhalb des Aufnahmebehälters endet, so daß die zugeführte Waschlösung in den Aufnahmebehälter gefördert werden kann.

In der US-A-4 940 865 ist eine Vorrichtung zum Erhitzen und Schmelzen von Materialien ebenfalls mittels der Bestrahlung durch Mikrowellen beschrieben. Diese Vorrichtung weist eine mit den Mikrowellen beaufschlagbare Heizkammer auf, in deren Boden eine runde Öffnung vorgesehen ist, unter der sich eine Hubplatte für einen das zu behandelnde Material enthaltenden Aufnahmebehälter befindet. Mit der Hubplatte läßt sich der Aufnahmebehälter zwischen einer unteren Be- oder Entladestellung und einer oberen Arbeitsstellung wahlweise heben und senken. In der oberen Arbeitsstellung schließt die Oberkante des Aufnahmebehälters mit dem Boden der Heizkammer ab, d.h., der Aufnahmebehälter bildet in seiner oberen Arbeitsstellung quasi ein Abdeckelement für die Öffnung im Boden der Heizkammer. Ein dichter Verschluß der Öffnung ist nicht vorgesehen, da zwischen dem oberen Umfangsrand des Aufnahmebehälters und dem Öffnungsrand der Öffnung ein geringer Spalt besteht. Dieser Spalt soll jedoch so Klein sein, daß die Mikrowellen durch diesen Spalt nicht austreten können.

Außerdem ist dieser bekannten Vorrichtung eine Ventilationseinrichtung für den Heizraum zugeordnet, bestehend aus einem Saugleitungsanschluß, durch den hindurch im Betrieb Dämpfe aus dem Heizraum abgesaugt werden können, wobei Raumluft durch Öffnungen im Boden der Heizkammer nachströmt. Auch diese Öffnungen sind so Klein bemessen, daß ein Mikrowellen-Austritt durch die Öffnungen verhindert ist.

Der Erfindung liegt die Aufgabe zugrunde, eine Vorrichtung der im Oberbegriff des Anspruchs 1 angegebenen Art so weiterzubilden, daß sie einfacher bzw. schneller zu handhaben und wirtschaftlicher ist.

Diese Aufgabe wird durch die kennzeichnenden Merkmale des Anspruchs 1 gelöst.

Je nach den Mikrowellen-Absorptionseigenschaften der für die Aufnahmebehälter verwendeten Materialien können mit der erfindungsgemäßen Vorrichtung sowohl polare als auch unpolare Flüssigkeiten äußerst schnell auf ihre jeweiligen Siedetemperaturen erwärmt werden; dies gilt insbesondere für polare Flüssigkeiten, in denen die Wärme direkt erzeugt wird, ohne daß eine Wärmeübertragung vom Aufnahmebehälter erforderlich ist.

Die erfindungsgemäße Vorrichtung kann beispielsweise durch einfaches Ein- und Ausschalten des Mikrowellengenerators oder durch Unterbrechen der Einkoppelung der Mikrowellen in die Aufnahmekammer äußerst schnell auf unterschiedliche Temperaturen eingestellt werden, so daß der Zeitverlust beim Umstellen der Vorrichtung auf die Destillation von Flüssigkeiten unterschiedlicher Siedepunkte vernachlässigbar klein ist.

Die Wirtschaftlichkeit der erfindungsgemäßen Vorrichtung kann bei Verwendung eines leistungsgesteuerten oder -geregelten Mikrowellengenerators dadurch gesteigert werden, daß die Flüssigkeit mit einer höheren als zur Einhaltung der Siedetemperatur erforderlichen Mikrowellen-Strahlungsleistung beschleunigt bis zum Siedepunkt erwärmt wird. Die Aufnahmekammer der erfindungsgemäßen Vorrichtung ist während der Destillation allseitig geschlossen. Sie weist somit keine freien Oberflächen wie die im Stand der Technik verwendeten Heizbäder auf, so daß ihre Wärmeabstrahlung bei entsprechend gesteigerter Wirtschaftlichkeit der Vorrichtung verringert ist. Die Wirtschaftlichkeit wird auch dadurch verbessert, daß die Aufnahmebehälter bei Verwendung der erfindungsgemäßen Vorrichtung nicht zwangsläufig aus Glas bestehen müssen, so daß Glasbruch und damit die Notwendigkeit zur Wiederholung der jeweiligen Destillation entsprechend weniger häufig auftritt.

Die erfindungsgemäße Vorrichtung kann ferner schnell und einfach für die Destillation hergerichtet werden: Der Aufnahmebehälter wird von Hand oder beispielsweise mittels einer Lade-und Entladeeinrichtung automatisch auf die in der Offenstellung befindliche Türanordnung übertragen, die sodann mittels der Antriebseinrichtung in die Schließstellung verfahren wird, in der der Aufnahmebehälter sich im Inneren der nunmehr verschlossenen Aufnahmekammer befindet. Ebenso automatisch kann das Entladen der Aufnahmekammer erfolgen. Da der zum Kühler führende Anschluß an der Aufnahmekammer angebracht ist, entfällt das im Stand der Technik erforderliche manuelle Verbinden des Aufnahmebehälters mit dem Kühleranschluß, d.h. mit dem Destillationsaufsatz.

Die Ausrüstung der Aufnahmekammer mit einem weiteren Anschluß, der zur Zuführung zu destillierender Flüssigkeiten vorgesehen ist, ermöglicht die Durchführung kontinuierlicher Destillationsvorgänge. Hierbei ist es vorteilhaft, ein Ventil zur Steuerung der Flüssigkeitszufuhr vorzusehen. Nach Beendigung der Destillation möglicherweise erhaltene feste Rückstände im Aufnahmebehälter können durch Zufuhr eines entsprechenden Lösungsmittels bei Überdruck sehr schnell in Lösung gebracht werden. Für diesen Fall ist die Aufnahmekammer unter Verwendung einer druckfesten Dichtungsanordnung entsprechend druckfest ausgebildet und mit einem Druckanschluß versehen.

Um bei einer kontinuierlichen Zuführung der zu destillierenden Flüssigkeiten deren Oberfläche im Aufnahmebehälter zu vergrößern und dadurch einen besseren Verdampfungseffekt zu erzielen, ist gemäß einer Weiterbildung der Erfindung die Türanordnung in ihrer Ebene mittels eines Motors drehbar; die auf den Boden des sich gemeinsam mit der Türanordnung drehenden Aufnahmebehälters auftreffenden Flüssigkeitsteilchen werden durch die infolge der Drehung auftretende Zentrifugalkraft nach außen bewegt. Unter dem Einfluß entsprechend hoher Zentrifugalkräfte kann das Überschäumen von zur Schaumbildung neigenden Flüssigkeiten verhindert werden.

Als Alternative zur drehbaren Türanordnung kann eine solche verwendet werden, die aus einem nicht drehbaren Türelement zum Verschließen der Zugangsöffnung und einer drehbaren Stützplatte für den Aufnahmebehälter besteht.

Um während der Destillation Kondensationseffekte innerhalb der Aufnahmekammer zu vermeiden, ist innerhalb derselben eine Haube aus mikrowellenabsorbierendem Material im Bereich oberhalb des Aufnahmebehälters angeordnet.

Gemäß einer Weiterbildung der Erfindung ist eine Steuer- und Regeleinheit zur Steuerung und Regelung wenigstens eines der folgenden Bauteile vorgesehen: Antriebseinrichtung, Mikrowellengenerator, Motor, Vakuumpumpe, Druckluftpumpe, Ventil sowie Lade- und Entladeeinrichtung. Wenn sämtliche dieser Bauteile gesteuert bzw. geregelt werden, sind vollautomatische Abläufe sowohl kontinuierlicher als auch diskontinuierlicher Destillationen möglich. Dabei ist es günstig, einen Temperatur- und/oder Drucksensoranschluß an der Aufnahmekammer vorzusehen, der zur Steuer- und Regeleinheit führt und eine Regelung des Mikrowellengenerators und/oder der Vakuumpumpe sowie der Druckluftpumpe ermöglicht.

Nachstehend ist die Erfindung anhand zweier Ausführungsbeispiele unter Bezugnahme auf die Zeichnung näher beschrieben. Es zeigen:
- Fig. 1: eine schematische, nicht maßstabsgerechte Schnittdarstellung des ersten Ausführungsbeispiels der erfindungsgemäßen Vorrichtung,
- Fig. 2: eine schematische, nicht maßstabsgerechte Schnittdarstellung des zweiten Ausführungsbeispiels der erfindungsgemäßen Vorrichtung,
- Fig. 3: eine praktische Ausführung der Vorrichtung nach Figur 2 in perspektivischer Darstellung mit freigelegter Aufnahmekammer, jedoch ohne Kühler, und
- Fig. 4: die Vorrichtung nach Figur 3 in gleicher Darstellung mit freigelegter Türanordnung mit Antriebseinrichtung.

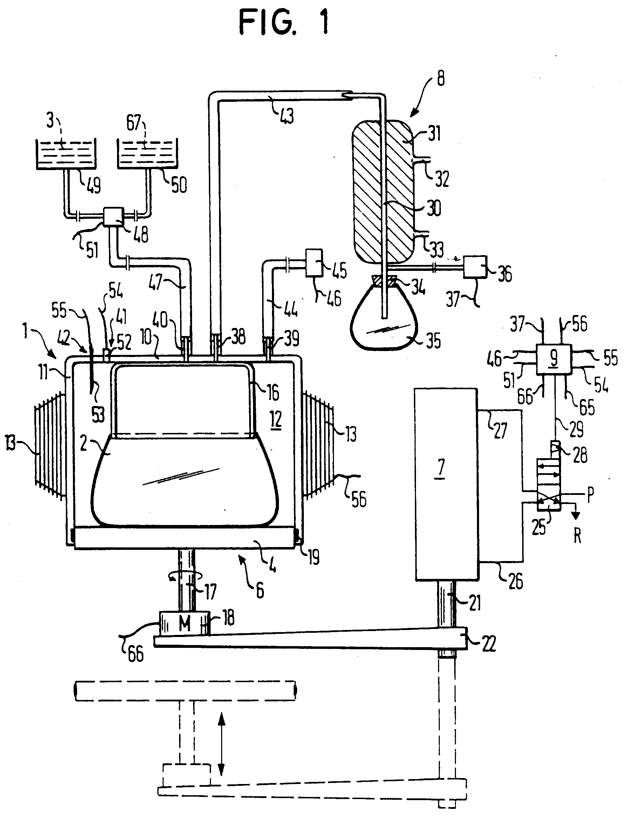

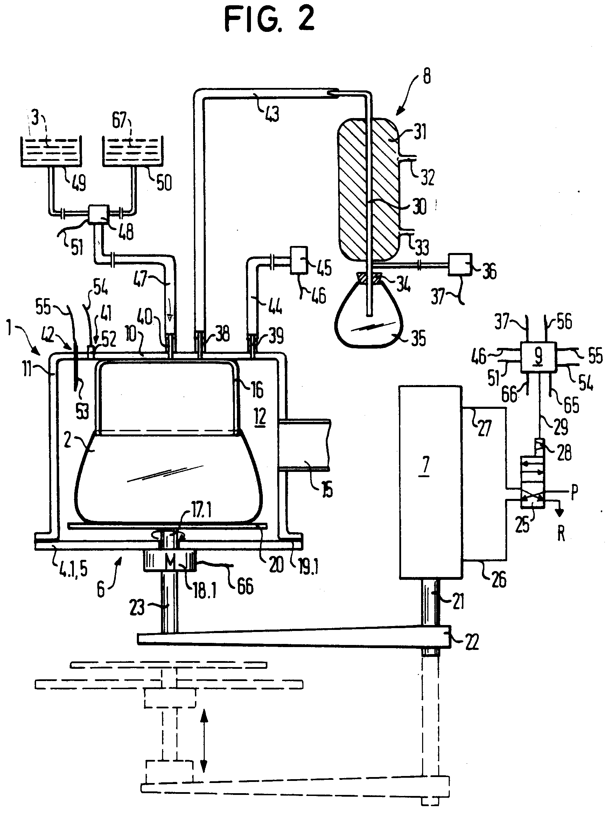

Die in der Zeichnung dargestellte Vorrichtung ist zum kontinuierlichen Destillieren von Flüssigkeiten im Vakuum vorgesehen und umfaßt eine druck- und vakuumfeste, mikrowellenreflektierende Aufnahmekammer 1 für Aufnahmebehälter 2 für die zu destillierenden Flüssigkeiten 3, eine Türanordnung 4 (Figur 1) bzw. 5 (Figur 2 bis 4), die sowohl zum Verschließen einer Zugangsöffnung 6 der Aufnahmekammer 1 als auch als Träger für die Aufnahmebehälter 2 dient, eine Antriebseinrichtung 7 zum Verfahren der Türanordnung 4 bzw. 5 von einer von der Aufnahmekammer 1 entfernten Offenstellung (gestrichelte Linien in Figur 1 und 2) in eine Schließstellung (durchgezogene Linien in Figur 1 und 2) und zurück, einen an die Aufnahmekammer 1 angeschlossenen Kühler 8 und eine Steuer- und Regeleinheit 9 zum Steuern und Regeln der Funktionen der erfindungsgemäßen Vorrichtung.

Die Aufnahmekammer 1 ist als ein senkrecht stehender, lediglich an seiner Oberseite mit einer Stirnwand 10 verschlossener Hohlzylinder 11 von kreisrundem Querschnitt ausgebildet. Der Zugang zum Innenraum 12 der Aufnahmekammer 1 erfolgt durch die der Stirnwand 10 gegenüberliegende Zugangsöffnung 6, die den gleichen Querschnitt wie der Hohlzylinder 11 aufweist.

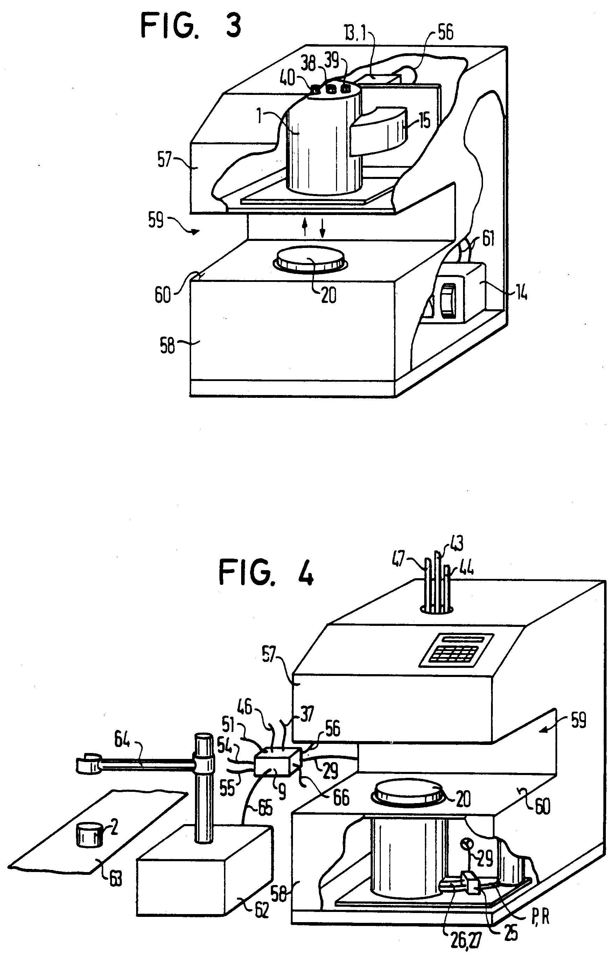

Im Ausführungsbeispiel nach Figur 1 ist ein herkömmlicher, in seiner Leistung regelbarer Mikrowellengenerator 13 an der Außenseite des Hohlzylinders 11 angebracht. Er umfaßt als Hauptbestandteile (nicht gezeigt) eine über einen Transformator 14 (siehe Figur 3) an eine Stromversorgung angeschlossene Magnetronröhre zum Erzeugen von Mikrowellen und eine Wellenführung zum Einkoppeln der Mikrowellen in den Innenraum 12 der Aufnahmekammer 1. Die Abmessungen der Wellenführung sind in bekannter Weise auf die Frequenz der Mikrowellen abgestimmt.

Gemäß den Figuren 2 bis 4 ist der mit dem Bezugszeichen 13.1 bezeichnete, ebenfalls herkömmliche und in seiner Leistung regelbare Mikrowellengenerator entfernt von der Aufnahmekammer 1 angebracht; seine Wellenführung ist als Hohlleiter 15 mit rechteckigem Querschnitt ausgebildet, der seitlich in den Hohlzylinder 11 einmündet.

Durch Wahl entsprechender Abmessungen ist die Aufnahmekammer 1 in bekannter Weise als Resonator ausgebildet, dessen Innenraum 12 somit einen Resonanzraum darstellt, in dem die eingekoppelten Mikrowellen total reflektiert werden. Die Aufnahmekammer 1 ist innenseitig mit Teflon beschichtet. In ihrem Innenraum 12 ist eine nach unten offene Haube 16 aus mikrowellenabsorbierendem Material an der Stirnwand 10 im Bereich oberhalb des oder der Aufnahmebehälter 2 befestigt.

Die Türanordnung 4 nach Figur 1 besteht aus einem mit gleichem Bezugszeichen 4 bezeichneten plattenförmigen Türelement mit kreisrundem Querschnitt, dessen Durchmesser etwas kleiner als der der Zugangsöffnung 6 ist. Das Türelement 4 ist in seiner Ebene drehbar und zu diesem Zweck mit der Antriebswelle 17 eines der Antriebseinrichtung 7 zugeordneten Motors 18 verbunden. Eine druck- und vakuumfeste Dichtungsanordnung 19 ist am Innenumfang der Aufnahmekammer 1 im Bereich der Zugangsöffnung 6 angeordnet und so ausgebildet, daß sie die Drehung des Türelementes 4 erlaubt, wenn dieses sich in seiner Schließstellung innerhalb der Aufnahmekammer 1 befindet. Die Oberseite des Türelements 4 dient als Standfläche für Aufnahmebehälter 2 und ist mit Teflon beschichtet.

Die Türanordnung 5 nach den Figuren 2 bis 4 besteht aus einem Türelement 4.1 und einer Stützplatte 20. Das Türelement 4.1 unterscheidet sich vom Türelement 4 nach Figur 1 durch einen derart größeren Durchmesser, daß es in seiner Schließstellung über die hier mit dem Bezugszeichen 19.1 bezeichnete druck- und und vakuumfeste Dichtungsanordnung am unteren Rand der Aufnahmekammer 1 anliegt und nicht drehbar ist. Die Stützplatte 20 ist von kreisrundem Querschnitt und mit Abstand oberhalb des Türelementes 4.1 angeordnet. Ihr Durchmesser ist kleiner als der Innendurchmesser der Aufnahmekammer 1; ihre Oberseite dient als Standfläche für Aufnahmebehälter 2 und ist mit Teflon beschichtet. Sie ist ferner in ihrer Ebene drehbar und zu diesem Zweck mit der Antriebswelle 17.1 des hier mit dem Bezugszeichen 18.1 bezeichneten Motors verbunden, der an der Unterseite des Türelementes 4.1 befestigt ist. Die Antriebswelle 17.1 durchsetzt, entsprechend abgedichtet, das Türelement 4.1. Beide Motoren 18 und 18.1 sind über je eine Steuerleitung 66 mit der Steuer- und Regeleinheit 9 verbunden.

Die Antriebseinrichtung 7 besteht aus einer doppeltwirkenden pneumatischen Kolben/Zylinder-Einheit, die gemäß den Figuren 1 und 2 in einer Ebene parallel zur Längsachse der Aufnahmekammer 1 angeordnet ist und an deren Kolbenstange 21 eine horizontal verlaufende Querverbindung 22 angreift, an deren freien Ende der Motor 18 gemäß Figur 1 befestigt ist. Gemäß Figur 2 stellt eine Hubstange 23 die Verbindung zwischen dem freien Ende der Querverbindung 22 und dem an der Unterseite des Türelementes 4.1 befestigten Motor 18.1 her. Gemäß Figur 3 und 4 ist die Kolben/Zylinder-Einheit unterhalb der Aufnahmekammer 1 gemeinsam mit dieser in einer Verkleidung 24 (siehe Fig. 4) angeordnet, so daß ihre Kolbenstange in nicht gezeigter Weise direkt am Motor 18 bzw. 18.1 angreift.

Der Kolben/Zylinder-Einheit 7 ist ein Steuerventil 25 in Form eines 4/2-Wegeventils mit elektromagnetischer Betätigung zugeordnet und über je eine Druckluftverbindungsleitung 26, 27 an beide Druckräume (nicht gezeigt) der Kolben/Zylinder-Einheit 7 angeschlossen. Die beiden verbleibenden Anschlüsse sind ein Zuluftanschluß P und ein Entlüftungsanschluß R. Das Steuerventil 25 steuert in der in den Figuren 1 und 2 gezeigten ersten Schaltstellung die Zuluft derart, daß der Kolben der Kolben/Zylinder-Einheit 7 über die Druckluftverbindungsleitung 26 in Richtung Schließstellung der Türanordnung 4 bzw. 5 beaufschlagt wird. In der zweiten Schaltstellung wird der Kolben über die Druckluftverbindungsleitung 27 in entgegengesetzter Richtung, d.h. in Richtung Offenstellung der Türanordnung 4 bzw. 5, beaufschlagt. Der Elektromagnet 28 des Steuerventils 25 ist über eine eine Steuerleitung 29 an die Steuer- und Regeleinheit 9 angeschlossen, die zur Steuerung und Regelung des kontinuierlichen Ablaufs der Destillation vorgesehen ist.

Der Kühler 8 ist ein Produktkühler von herkömmlicher Konstruktion und umfaßt ein Kondensationsrohr 30, das einen senkrecht stehenden Kühlzylinder 31 durchsetzt, der über eine Vorlaufleitung 32 und eine Rücklaufleitung 33 an einen nicht gezeigten Kühlwasservorrat angeschlossen ist. Das am unteren Ende des Kühlzylinders 31 herausragende freie Ende des Kondensationsrohres 30 mündet in einer sogen. Vorlage 35, einen Verschlußstopfen 34 derselben durchsetzend, aus, die die Form eines Rundkolbens aufweist und zum Auffangen des aus dem Kondensationsrohr 30 abtropfenden Kondensats vorgesehen ist. Das Kondensationsrohr 30 ist im Bereich zwischen dem Kühlzylinder 31 und der Vorlage 35 über eine Vakuumleitung an eine Vakuumpumpe 36 angeschlossen, die über eine Steuerleitung 37 mit der Steuer- und Regeleinheit 9 verbunden ist.

In der Stirnwand 10 der Aufnahmekammer 1 sind fünf Anschlüsse 38 bis 42 ausgebildet. Der Anschluß 38 ist über eine Verbindungsleitung 43 an das Kondensationsrohr 30 und der Anschluß 39 über eine Druckluftleitung 44 an eine Druckluftpumpe 45 angeschlossen, die über eine Steuerleitung 46 mit der Steuer- und Regeleinheit 9 verbunden ist. Der Anschluß 40 führt über eine Versorgungsleitung 47 zu einem Stromteilerventil 48 mit wenigstens zwei Schaltstellungen und veränderlichem Durchflußquerschnitt, das über wenigstens zwei Zweigleitungen an zwei Vorratsbehälter 49, 50 angeschlossen ist. Das Stromteilerventil 48 wird über eine Steuerleitung 51 von der Steuer- und Regeleinheit 9 angesteuert. Die Anschlüsse 41 und 42 sind Sensoranschlüsse für einen Drucksensor 52 bzw. einen Temperatursensor 53. Der Drucksensor 52 schließt bündig mit der Innenfläche der Stirnwand 10 ab und kann somit aus Metall hergestellt sein. Der metallfreie Temperatursensor 53 ragt in den Innenraum 12 der Aufnahmekammer 1 hinein. Beide Sensoren 52, 53 sind über je eine Sensorleitung 54 bzw. 55 mit der Steuer- und Regeleinheit 9 verbunden. Eine weitere Steuerleitung 56 verbindet den Mikrowellengenerator 13 bzw. 13.1 mit der Steuer- und Regeleinheit 9.

Durch Wahl entsprechende Abmessungen und/oder Verwendung von reflexionsfreien Abschlüssen, Stiften, Blenden etc. ist sichergestellt, daß keine Mikrowellen durch die Anschlüsse 38, 39, 40 austreten.

Die Vorrichtung nach den Figuren 3 und 4 umfaßt ein U-förmig ausgebildetes Gehäuse, dessen Schenkel von einem oberen und einem unteren Gehäuseteil 57 bzw. 58 gebildet und horizontal ausgerichtet sind. Der freie Raum 59 zwischen den beiden Gehäuseteilen 57, 58 mündet an der Gehäusevorderseite frei zugänglich aus.

Im oberen Gehäuseteil 57 ist die Aufnahmekammer 1 gemäß Figur 2 und im unteren Gehäuseteil 58 die in den Figuren 1 und 2 gezeigte Kolben/Zylinder-Einheit 7 innerhalb der Verkleidung 24 sowie die Türanordnung 5 untergebracht. Deren Stützplatte 20 ragt in der Offenstellung etwas über die Oberseite 60 des unteren Gehäuseteils 58 in den freien Raum 59 hinein. Der Mikrowellengenerator 13.1 im oberen Gehäuseteil 57 und der Transformator 14 im unteren Gehäuseteil 58 sind über Kabel 61 miteinander verbunden. Die mit den Anschlüssen 38, 39 und 40 verbundenen Leitungen 43, 44 und 47 sind aus einer Öffnung an der Oberseite des oberen Gehäuseteils 57 herausgeführt (Figur 4). Im unteren Gehäuseteil 58 sind die Druckverbindungsleitungen 26, 27, das Steuerventil 25 sowie dessen Zu- und Abluftleitung P bzw. R angedeutet.

Figur 4 zeigt weiterhin in schematischer Darstellung eine Lade- und Entladeeinrichtung 62 und ein Transportband 63. Erstere ist mit einem schwenkbaren sowie heb- und senkbaren Greifarm 64 ausgerüstet und über eine Steuerleitung 65 an die Steuer- und Regeleinheit 9 angeschlossen. Mit dem Transport-band 63 werden die in die Aufnahmekammer 1 zu ladenden sowie aus dieser nach Beendigung der jeweils durchgeführten Destillation zu entfernenden Aufnahmebehälter 2 zur Lade- und Entladeeinrichtung 62 transportiert und von dieser abtransportiert.

Nachstehend ist die Funktion der erfindungsgemäßen Vorrichtung beschrieben:
Zu Beginn der kontinuierlichen Destillation wird die Aufnahmekammer 1 mit einem oder mehreren leeren Aufnahmebehältern 2 beschickt. Zu diesem Zweck wird die Lade- und Entladeeinrichtung 62 von der Steuer- und Regeleinheit 9 über die Steuerleitung 65 angesteuert und übernimmt dementsprechend mit ihrem Greifarm 64 einen leeren Aufnahmebehälter 2 vom Transportband 63 und überträgt diesen durch entsprechende Hub- und Schwenkbewegungen des Greifarmes 64 auf die Stützplatte 20 der in der Offenstellung befindlichen Türanordnung 5. Sobald der Greifarm 64 in seine in Figur 4 gezeigte Ausgangsstellung zurückgeschwenkt ist, wird der Elektromagnet 28 von der Steuer- und Regeleinheit 9 über die Steuerleitung 29 angesteuert und damit das Steuerventil 25 von der zweiten Schaltstellung in die in Figur 2 gezeigte erste Schaltstellung geschaltet. Dadurch wird der Kolben der Kolben/Zylinder-Einheit 7 zusammen mit der mit dem Aufnahmebehälter 2 beladenen Türanordnung 5 nach oben verfahren, bis letztere in die Schließstellung gelangt, in der der Aufnahmebehälter 2 sich im druck- und vakuumdicht verschlossenen Innenraum 12 der Aufnahmekammer 1 befindet.

Für die Destillation polarer Flüssigkeiten können die Aufnahmebehälter aus mikrowellendurchlässigem oder mikrowellenundurchlässigem Material verwendet werden. Im ersteren Fall erfolgt die Erwärmung der Flüssigkeit direkt durch den unmittelbaren Einfluß der Mikrowellen und im letzteren Fall indirekt durch Wärmeübertragung von dem durch die Mikrowellen erwärmten Aufnahmebehälter. Selbstverständlich kann auch mikrowellenteildurchlässiges Material verwendet werden. Für die Destillation unpolarer Flüssigkeiten ist die indirekte Erwärmung notwendig.

Nun steuert die Steuer- und Regeleinheit 9 über die Steuerleitung 51 das Stromteilerventil 48 an, das dadurch so geschaltet und in seinem Durchflußquerschnitt eingestellt wird, daß Flüssigkeit 3 vom Vorratsbehälter 49 über die Versorgungsleitung 47 und den Anschluß 40 dem Innenraum 12 der Aufnahmekammer 1 und damit dem Aufnahmebehälter 2 stetig, vorzugsweise tropfenweise, zugeführt wird.

Nahezu gleichzeitig werden der Motor 18.1, die Vakuumpumpe 36 und der Mikrowellengenerator 13.1 von der Steuer- und Regeleinheit 9 über die Steuerleitungen 66, 37 und 56 angesteuert und dadurch eingeschaltet. Der eingeschaltete Mikrowellengenerator 13.1 erzeugt Mikrowellen, die durch den Hohlleiter 15 in die Aufnahmekammer 1 eingekoppelt werden und die durch den Anschluß 40 eingetropfte Flüssigkeit direkt oder indirekt (je nach deren Polarität und der Mikrowellenabsorptionseigenschaften des Aufnahmebehälters) erwärmen. Dabei dreht der eingeschaltete Motor 18.1 die Stützplatte 20 und damit den Aufnahmebehälter 2, so daß die durch den Anschluß 40 zugeführte Flüssigkeit 3 auf dem Boden des Aufnahmebehälters 2 radial nach außen bewegt und somit verteilt wird. Die dabei erzielte große Flüssigkeitsoberfläche führt in Verbindung mit der Herabsetzung des Siedepunktes durch das von der Vakuumpumpe 36 erzeugte Vakuum in der Aufnahmekammer 1 zu einer sehr schnellen Erwärmung und Verdampfung. Die durch die eingekoppelten Mikrowellen erwärmte Haube 16 verhindert Kondensatbildung im aufsteigenden Flüssigkeitsdampf, der durch den Anschluß 38 und die Versorgungsleitung 43 dem Kühler 8 zugeführt wird, dort in bekannter Weise an der Innenfläche des Kondensatrohres 30 kondensiert und sodann in die Vorlage 35 tropft.

Während der Destillation erzeugen die Sensoren 52, 53 dem Druck und der Temperatur innerhalb der Aufnahmekammer 1 proportionale Signale, die über die Sensorleitungen 54 bzw. 55 der Steuer- und Regeleinheit 9 zugeführt werden, die durch Ausgabe entsprechender Steuersignale über die Steuerleitungen 37, 56 die Vakuumpumpe 36 und den Mikrowellengenerator 13.1 auf die zur Aufrechterhaltung der vorgegebenen Druck- und Temperaturwerte innerhalb der Aufnahmekammer 1 erforderlichen Leistung regelt.

Die Destillation kann in der vorbeschriebenen Weise kontinuierlich so lange durchgeführt werden, bis die Flüssigkeit 3 im Vorratsbehälter 49 aufgebraucht ist oder bis beispielsweise eine bestimmte Menge Rückstand sich im Aufnahmebehälter 2 angesammelt hat. In letzterem Fall werden von der Steuer- und Regeleinheit 9 über die entsprechenden Steuerleitungen 56, 37 der Mikrowellengenerator 13.1 sowie die Vakuumpumpe 36 ausgeschaltet und das Stromteilerventil 48 so geschaltet, daß ein Löungsmittel 67 für den Rückstand im Vorratsbehälter 50 dem Aufnahmebehälter 2 zugeführt wird. Gleichzeitig steuert die Steuer- und Regeleinheit 9 über die Steuerleitung 46 die Druckluftpumpe 45 an, so daß diese einschaltet und den Innenraum 12 der Aufnahmekammer 1 unter entsprechenden Druck setzt. Dieser Druck führt in Verbindung mit einer gleichzeitigen Drehung der Stützplatte 20 und damit des Aufnahmebehälters 2 zur raschen Auflösung des Rückstandes im Lösungsmittel 67. Anschließend schaltet die Steuer- und Regeleinheit 9 den Motor 18.1 und die Druckluftpumpe 45 aus, betätigt das Stromteilerventil 48 in seine Schließstellung sowie das Steuerventil 25 in seine zweite Schaltstellung, in der die Kolben/Zylinder-Einheit 7 und damit die Türanordnung 5 mitsamt dem Aufnahmebehälter 2 in die Offenstellung verfahren wird. Der Greifarm 64 überträgt dann den Aufnahmebehälter 2 mit dem gelösten Rückstand auf das Transportband 63.

Wenn die Bestandteile der Flüssigkeit weit auseinanderliegende Siedepunkte haben, kann das im Kühler 8 kondensierte Destillat mit mehreren Vorlagen, die über eine sogen. Spinne mit dem Kühler 8 verbunden sind, aufgefangen werden. Auch eine Rektifikation ist mit der erfindungsgemäßen Vorrichtung möglich.

Soll eine Destillation diskontinuierlich durchgeführt werden, wird die Aufnahmekammer 1 mit Hilfe der Lade- und Entladeeinrichtung 62 oder manuell mit einem mit der zu destillierenden Flüssigkeit gefüllten Aufnahmebehälter 2 beschickt. Die Destillation wird bei in der Schließstellung befindlichen Stromteilerventil 48 durchgeführt und ist beendet, wenn die gesamte Flüssigkeit im Aufnahmebehälter 2 verdampft ist.

## Patentansprüche

1. Vorrichtung zum Destillieren von Flüssigkeiten im Vakuum, mit
- wenigstens einem an eine Vakuumpumpe (36) anschließbaren Aufnahmebehälter (2) für eine zu destillierende Flüssigkeit,
- einer Heizanordnung zum Erwärmen des Aufnahmebehälters (2) oder der Flüssigkeit zwecks Verdampfung der Flüssigkeit,
- einem Kühler (8) zum Kondensieren des Dampfes, der an den Aufnahmebehälter (2) anschließbar ist,
- wenigstens einem an den Kühler (8) anschließbaren Auffangbehälter (35) für das Kondensat,
- wobei die Heizanordnung wenigstens eine vakuumfeste und mikrowellenreflektierende Aufnahmekammer (1) für den Aufnahmebehälter (2) und wenigstens einen an die Aufnabmekammer (1) anschließbaren Mikrowellengenerator (13, 13.1) zum Erzeugen von Mikrowellen und zum Einkoppeln derselben in die Aufnahmekammer (1) umfaßt,
- und wobei die Aufnahmekammer (1) eine Zugangsöffnung (6) aufweist, die durch eine Türanordnung (4, 5) zu öffnen und zu schließen ist,
**dadurch gekennzeichnet,**
- daß die Zugangsöffnung (6) und die Türanordnung (4,5) an der Unterseite der Aufnahmekammer (1) angeordnet sind,
- daß die Türanordnung (4, 5) zum Halten des Aufnahmebehalters (2) eingerichtet ist,
- daß die Türanordnung (4, 5) mittels einer Antriebseinrichtung (7) zwischen einer Offen- und einer Schließstellung im wesentlichen vertikal verfahrbar ist,
- daß eine Dichtungsanordnung (19, 19.1) an der Aufnahmekammer (1) und/oder an der Türanordnung (4, 5) zum vakuumdichten Verschließen der Zugangsöffnung (6) vorgesehen ist,
- und daß die Aufnahmekammer (1) einen Anschluß (38) aufweist, der an den Kühler (8) und an die Vakuumpumpe (36) anschließbar ist.

2. Vorrichtung nach Anspruch 1,
**gekennzeichnet durch** eine in der Aufnahmekammer (1) im Bereich oberhalb des Aufnahmebehälters (2) angeordnete Haube (16) aus mikrowellenabsorbierendem Material.

3. Vorrichtung nach Anspruch 1 oder 2,
**dadurch gekennzeichnet,**
daß die Türanordnung (4) in ihrer Ebene mittels eines Motors (18) drehbar ist.

4. Vorrichtung nach Anspruch 1 oder 2,
**dadurch gekennzeichnet,**
daß die Türanordnung (5) ein Türelement (4.1) zum Verschließen der Zugangsöffnung (6) und wenigstens eine Stützplatte (20) für den Aufnahmebehälter (2) umfaßt.

5. Vorrichtung nach Anspruch 4,
**dadurch gekennzeichnet,**
daß die Stützplatte (20) in ihrer Ebene mittels eines Motors (18.1) drehbar ist.

6. Vorrichtung nach wenigstens einem der vorhergehenden Ansprüche,
**dadurch gekennzeichnet,**
daß die Aufnahmekammer (1) druckfest und die Dichtungsanordnung (19, 19.1) zum druckdichten Verschließen der Zugangsöffnung (6) ausgebildet ist und die Aufnahmekammer (1) einen Druckanschluß an eine Druckluftpumpe (45) aufweist.

7. Vorrichtung nach wenigstens einem der vorhergehenden Ansprüche,
**dadurch gekennzeichnet,**
daß die Aufnahmekammer (1) einen weiteren Anschluß (40) zur Zuführung zu destillierender Flüssigkeiten (3) aufweist.

8. Vorrichtung nach Anspruch 7,
**gekennzeichnet durch** ein Ventil (48) zur Steuerung der Flüssigkeitszufuhr.

9. Vorrichtung nach wenigstens einem der vorhergehenden Ansprüche,
**dadurch gekennzeichnet,**
daß die Aufnahmekammer (1) einen Temperatur- und/oder Drucksensoranschluß (42, 41) aufweist.

10. Vorrichtung nach wenigstens einem der vorhergehenden Ansprüche,
**gekennzeichnet durch** eine Lade- und Entladeeinrichtung (62-64) zum Beladen der Aufnahmekammer (1) mit Aufnahmebehältern (2) und zum Entladen derselben.

11. Vorrichtung nach wenigstens einem der vorhergehenden Ansprüche,
**gekennzeichnet durch** eine Steuer- und Regeleinheit (9) zur Steuerung bzw. Regelung wenigstens eines der folgenden Bauteile: Antriebseinrichtung (7), Mikrowellengenerator (13, 13.1), Motor (18, 18.1), Vakuumpumpe (36), Druckluftpumpe (45), Ventil (48) sowie Lade- und Entladeeinrichtung (62).

## Claims

1. Apparatus for distilling liquids in a vacuum, having
- at least one receptacle (2) for a liquid to be distilled, connectable to a vacuum pump (36),
- a heating arrangement for heating the receptacle (2) or the liquid, for causing the liquid to evaporate,
- a condenser (8) for condensing the vapour, which is connectable to the receptacle (2), and
- at least one collecting vessel (35) connectable to the condenser (8), for the condensate,
- whereby the heating arrangement includes at least one vacuum-tight and microwave-reflecting receiving chamber (1) for the receptacle (2) and at least one microwave generator (13, 13.1), connectable to the receiving chamber (1), for generating microwaves and coupling them into the receiving chamber (1),
- and whereby the receiving chamber (1) has an access opening (6), which can be opened and closed by means of a door arrangement (4, 5),
characterised,
- in that the access opening (6) and the door arrangement (4, 5) are arranged at the underside of the receiving chamber (1),
- in that the door arrangement (4, 5) is equipped for holding the receptacle (2),
- in that the door arrangement (4, 5) is movable substantially vertically by means of a drive arrangement (7) between an open and a closed position,
- in that a sealing arrangement (19, 19.1) is provided on the receiving chamber (1) and/or on the door arrangement (4, 5) to close the access opening (6) in a vacuum-tight manner.
- and in that the receiving chamber (1) has a connection (38) which is connectable to the condenser (8) and the vacuum pump (36).

2. Apparatus according to claim 1,
characterised by a hood (16) of microwave absorbing material arranged in the receiving chamber (1) in the region above the receptacle (2).

3. Apparatus according to claim 1 or 2,
characterised in that,
the door arrangement (4) is rotatable in its plane by means of a motor (18).

4. Apparatus according to claim 1 or 2,
characterised in that,
the door arrangement (5) includes a door element (4.1) for closing the access opening (6) and at least one support plate (20) for the receptacle (2).

5. Apparatus according to claim 4,
characterised in that,
the support plate (20) is rotatable in its plane by means of a motor (18.1).

6. Apparatus according to any preceding claim,
characterised in that,
the receiving chamber (1) is pressure-tight and the sealing arrangement (19, 19.1) is formed to close the access opening (6) in a pressure-tight manner and the receiving chamber (1) has a pressure connection to a compressed air pump (45).

7. Apparatus according to any preceding claim,
characterised in that,
the receiving chamber (1) has a further connection (40) for supplying liquid (3) to be distilled.

8. Apparatus according to claim 7,
characterised by a valve (48) for controlling the liquid supply.

9. Apparatus according to any preceding claim,
characterised in that,
the receiving chamber (1) has a temperature and/or pressure sensor connection (42, 41).

10. Apparatus according to any preceding claim,
characterised by a loading and unloading device (62-64) for loading the receiving chamber (1) with receptacles (2) and for unloading them.

11. Apparatus according to any preceding claim,
characterised by a control and regulating unit (9) for controlling or regulating at least one of the following components: drive arrangement (7), microwave generator (13, 13.1), motor (18, 18.1), vacuum pump (36), compressed air pump (45), valve (48) and loading and unloading device (62).

## Revendications

1. Dispositif de distillation sous vide de liquides, comportant
- au moins un récipient (2) à produit à distiller pour un liquide à distiller, qui peut être connecté à une pompe à vide (36),
- un dispositif de chauffage pour réchauffer le récipient à produit à distiller (2) ou le liquide à des fins de vaporisation dudit liquide,
- un refroidisseur (8) pour condenser la vapeur, qui peut être connecté au récipient (2) à produit à distiller,
- un récipient (35) de récupération pour le condensat, qui peut être connecté au refroidisseur (8),
- le dispositif de chauffage comprenant au moins une chambre réceptrice (1) étanche au vide et réfléchissante aux ondes micrométriques, pour le récipient (2) à produit à distiller, et au moins un générateur (13, 13.1) d'ondes micrométriques qui peut être connecté à la chambre réceptrice (1), pour générer des ondes micrométriques et pour coupler celles-ci dans la chambre réceptrice (1) et,
- la chambre réceptrice (1) présentant une ouverture d'accès (6) qui peut être ouverte et fermée à l'aide d'un système de porte (4, 5),
caractérisé par le fait
- que l'ouverture d'accès (6) et le système de porte (4, 5) sont disposés aun niveau de la face inférieure de la chambre réceptrice (1),
- que le système de porte (4, 5) est agencé pour supporter le récipient (2) à produit à distiller,
- que le système de porte (4, 5) peut être déplacé sensiblement verticalement à l'aide d'un dispositif d'entraînement (7), entre une position ouverte et une position fermée,
- qu'un système de joint (19, 19.1) est prévu sur la chambre réceptrice (1) et/ou le système de porte (4, 5), aux fins de fermer de manière étanche au vide l'ouverture d'accès (6) et,
- que la chambre réceptrice (1) comporte un raccord (38) qui peut être connecté au refroidisseur (8) et à la pompe à vide (36).

2. Dispositif selon la revendication 1, caractérisé par une coiffe (16) en matériau absorbant les ondes micrométriques, qui est disposée dans la chambre réceptrice (1), dans la zone au-dessus du récipient à liquide à distiller (2).

3. Dispositif selon la revendication 1 ou 2, caractérisé par le fait que le système de porte (4) peut être déplacé dans son plan à l'aide d'un moteur (18).

4. Dispositif selon la revendication 1 ou 2, caractérisé par le fait que le système de porte (5) comprend un élément (4.1) de porte pour fermer l'ouverture d'accès (6) et au moins une plaque de support (20) pour le récipient (2) à produit à distiller.

5. Dispositif selon la revendication 4, caractérisé par le fait que la plaque de support (20) peut tourner dans son plan à l'aide d'un moteur (18.1).

6. Dispositif selon au moins une des revendications précédentes, caractérisé par le fait que la chambre réceptrice (1) est étanche à la pression, que le système de joint (19,19.1) est agencé pour fermer de manière étanche à la pression l'ouverture d'accès (6) et que la chambre réceptrice (1) présente un raccord d'air comprimé pour la connexion à une pompe à air comprimé (45).

7. Dispositif selon au moins une des revendications précédentes, caractérisé par le fait que la chambre réceptrice (1) comporte un raccord supplémentaire (40) pour l'introduction de liquides (3) à distiller.

8. Dispositif selon la revendication 7, caractérisé par une vanne (48) pour le contrôle de l'admission de liquide.

9. Dispositif selon au moins une des revendications précédentes, caractérisé par le fait que la chambre réceptrice (1) comporte une prise (42, 41) de capteur de température et/ou de capteur de pression.

10. Dispositif selon au moins une des revendications précédentes, caractérisé par un dispositif de chargement et de déchargement (62, 64) pour charger des récipients (2) à produit à distiller dans la chambre réceptrice (1) et pour décharger lesdits récipients.

11. Dispositif selon au moins une des revendications précédentes, caractérisé par une unité (9) de commande et de régulation pour commander et contrôler au moins l'un des composants suivants: dispositif d'entraînement (7), générateur d'ondes micrométriques (13, 13.1), moteur (18, 18.1), pompe à vide (36), pompe à air comprimé (45), vanne (48) ainsi que dispositif de chargement et de déchargement (62).
